# EUROPEAN PATENT SPECIFICATION

(11) **EP 2 762 928 B1**
(45) Date of publication and mention of the grant of the patent: **30.12.2020**
(21) Application number: 14152693.9
(22) Date of filing: 27.01.2014
(51) Int. Cl.: G01V 5/00

(54) **Recognizing method of flaky or blocky prohibited articles, explosives or drugs**
Verfahren zur Erkennung von flockigen oder blockförmigen verbotenen Artikeln, Sprengstoffen oder Drogen
Procédé de reconnaissance d'articles interdits en bloc ou en paillettes, d'explosifs ou de drogues

(30) Priority: 01.02.2013 CN 201310041293
(43) Date of publication of application: 06.08.2014
(73) Proprietor: Nuctech Company Limited, TongFang Building, Shuangqinglu, Haidian District Beijing 100084 (CN); Tsinghua University, Haidian District Beijing 100084 (CN)
(72) Inventor: Zhang, Li, Haidian District Beijing 100084 (CN); Huang, Qingping, Haidian District Beijing 100084 (CN); Sun, Yunda, Haidian District Beijing 100084 (CN); Lei, Lei, Haidian District Beijing 100084 (CN); Tang, Zhi, Haidian District Beijing 100084 (CN)
(74) Representative: Carpmaels & Ransford LLP

(56) References cited:
- CN-A- 1 305 610
- US-B1- 6 317 509

## Description

### CROSS-REFERENCE TO RELATED APPLICATION

This application claims the benefit of Chinese Patent Application No. 201310041293.3 filed on February 1, 2013 in the State Intellectual Property Office of China.

### BACKGROUND OF THE INVENTION

### 1. Field of the Invention

The present invention generally relates to recognition methods of prohibited articles, explosives or drugs in computed tomogram imaging data, and more particularly, to recognition methods of flaky or blocky prohibited articles, explosives or drugs.

### 2. Description of the Related Art

Since 9-11 event of the United States, security inspection in aviation industry has become more and more concerned. CT technique based security inspection products have incomparable advancement, and significant property superiority. TSA mechanism of US contends that one important way for achieving safety inspection in airports is to employ CT apparatuses and inspection methods thereof. The recognition to the flaky or blocky prohibited articles is one key technique for the CT apparatus, which play a pivotal role to inspect the prohibited articles hidden in the luggage and parcel. Particularly, the recognition method of the flaky prohibited articles would prevent the prohibited articles being entrained in books or notebooks.

Through analysis of several references US 6, 195, 444 B1, CN 1305610A and CN 1178019A in the prior art, it can be apparent that they all employ methods of directly analyzing three-dimensional volume data, and thus the three-dimensional data will not be analyzed till the last tomogram data is obtained. Therefore, this results in a period of waiting time. In this way, this causes the following disadvantages: too much waiting and analyzing time, and relatively long time delay, due to too many tomogram data to be analyzed, huge amount of data is, and long time for analyzing after the last tomogram data are acquired. In the above patent references, a cube background method or morphological erosion method is used to inspect the flaky objects. This indirectly utilizes physical features that the flaky objects have a relatively thin thickness, and it is not convenient to set parameters thereof. The cube background method has high complexity and large computing amount. And further, when the flaky object is close to one blocky object, or has many pixels adjacent thereto, this method tends to become invalid and neglect some objects upon recognizing, since the pixels to be detected have little differences from the background pixels.

In view of this, there indeed needs to provide recognition methods of flaky or blocky prohibited articles, explosives or drugs, which can reduce or eliminate the time delay.

US6317509B1 describes a method and apparatus for detecting sheet explosives in computed tomography data. In particular, sheet-shaped objects such as sheet explosives can be discriminated from other object shapes and detected. The detection includes analysing a neighbourhood of voxels surrounding a test voxel. If the density of the test voxel is sufficiently different from the mean density of the neighbouring voxels, then it is concluded that the test voxel is associated with a sheet object.

### SUMMARY OF THE INVENTION

In view of the above shortages in prior arts, an object of the present invention is to alleviate at least one aspect of the above problems and defects.

In accordance with one aspect of the present invention, it provides a method for recognizing flaky prohibited articles, explosives or drugs, according to claim 1.

In accordance with another aspect of the present invention, it also provides a method for recognizing blocky prohibited articles, explosives or drugs, according to claim 8.

Concerning the above, in the present invention, the complex problem of extracting three-dimensional targets is simplified as the problem of extracting two-dimensional targets, the technique of which is more mature. The present method does not need to obtain all the imaging data of tomogram at one time. In addition, the present method employs advanced tomogram analysis layer by layer, and then gradually adds up the tomogram areas, so as to grow up to become the three-dimensional object. Since the tomogram data is analyzed layer by layer, no waiting time is needed. Once the data of one tomogram is received, these will be analysed and recognized immediately, and the same processing procedure is applied to the next tomogram. In this way, when the last tomogram is received, only the data of this tomogram are needed to be analyzed. The data to be added up are small, that is, the data amount to be analyzed is small, and thus there is little time delay. When inspecting the flaky target, it is capable of more quickly locating it by directly measuring the geometric property of the two-dimensional areas, such as length, thickness. Therefore, the present invention is obviously different from the prior art.

### BRIEF DESCRIPTION OF THE DRAWINGS

These and other aspects as well as advantages of the present invention will become apparent and readily understood from the description of the preferred embodiments taking in conjunction with the accompanying drawings, in which:
Figure 1 is a flowchart of a recognition method of flaky prohibited articles in accordance with a first embodiment of the present invention;
Figure 2 is a schematic image of the recognition method after quantizing processing of tomogram data as shown in figure 1;
Figure 3 is a schematic image of the recognition method after splitting tomogram data as shown in figure 1;
Figure 4 is a schematic image of the recognition method shown in figure 1 where it has recognised out flaky regions within the tomogram;
Figure 5 is a schematic image of outputted flaky targets in accordance with the recognition method of figure 1;
Figure 6 is a flowchart of a recognition method of blocky prohibited articles in accordance with a second embodiment of the present invention;
Figure 7 is a schematic image of the recognition method after quantizing processing of tomogram data as shown in figure 6;
Figure 8 is a schematic image of the recognition method after splitting tomogram data as shown in figure 6;
Figure 9 is a schematic image of the recognition method shown in figure 6 where it has recognised out effective blocky regions within the tomogram; and
Figure 10 is a schematic image of outputted blocky targets in accordance with the recognition method of figure 6.

### DETAILED DESCRIPTION OF THE EMBODIMENTS

Technical solutions of the present invention will be described hereinafter in more detail by the way of embodiment with reference to figures of the attached drawings, wherein the same or like reference numerals refer to the same or like elements throughout the specification. The explanation to the embodiment of the present invention with referring to the accompanying drawings is intended to interpret the general inventive concept of the present invention, rather than being construed as a limiting to the present invention.

A main concept of the present invention is as follows: analyzing imaging data of computed tomogram layer by layer; obtaining a two-dimensional target area by using database of prohibited articles, explosives and/or drugs, including steps of pre-processing, splitting the image, and detecting and merging of effective regions; and merging these two-dimensional target areas into a three-dimensional target object, so that an incremental detection for the prohibited articles is achieved within the imaging data of computed tomogram, without any delays. The above concept of the present invention is applicable to intelligent recognition of flaky or blocky prohibited articles (for example, explosives, drugs, and cutting tools). When recognizing the flaky prohibited articles, explosives, and drugs, it is possible to locate it more quickly and accurately, by directly measuring geometrical property of the two-dimensional regions, such as length, or thickness. When recognizing the blocky prohibited articles, explosives and drugs, the effective blocky regions are accurately recognized by searching in the database of prohibited articles, explosives and drugs.

### First Embodiment

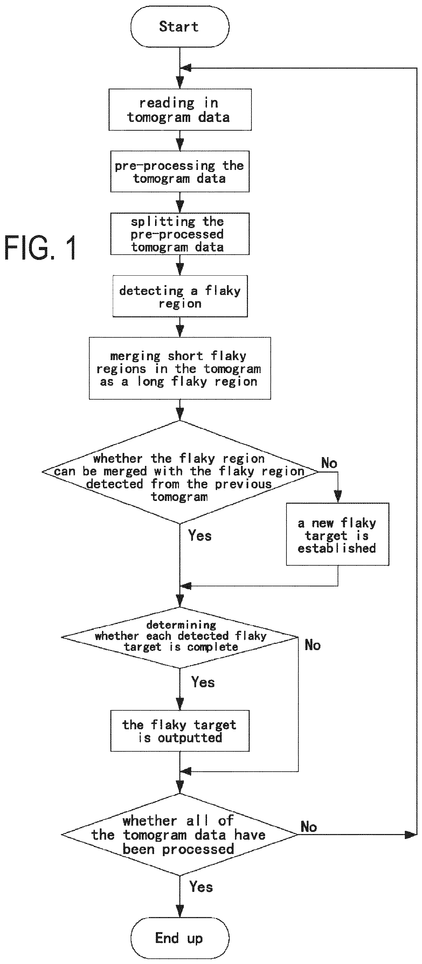

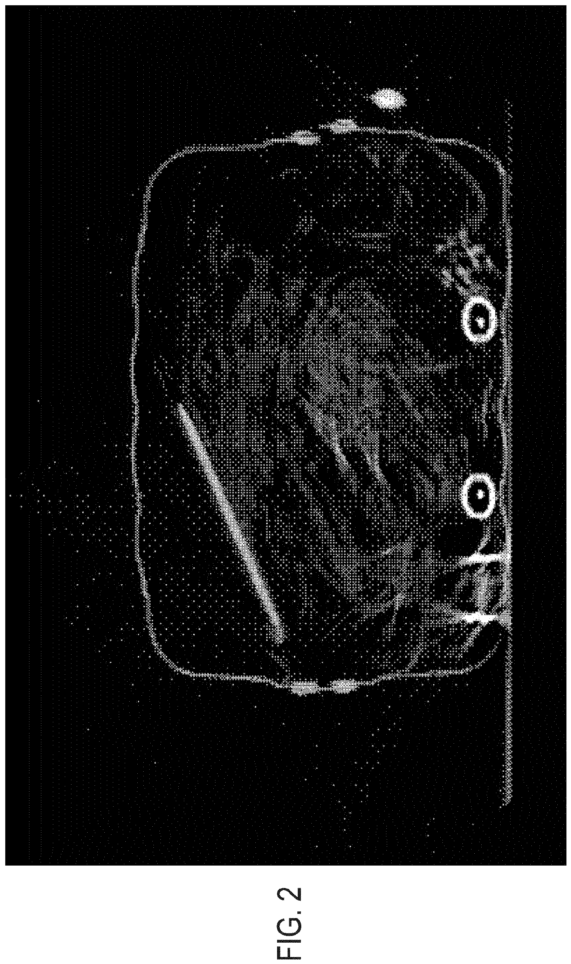

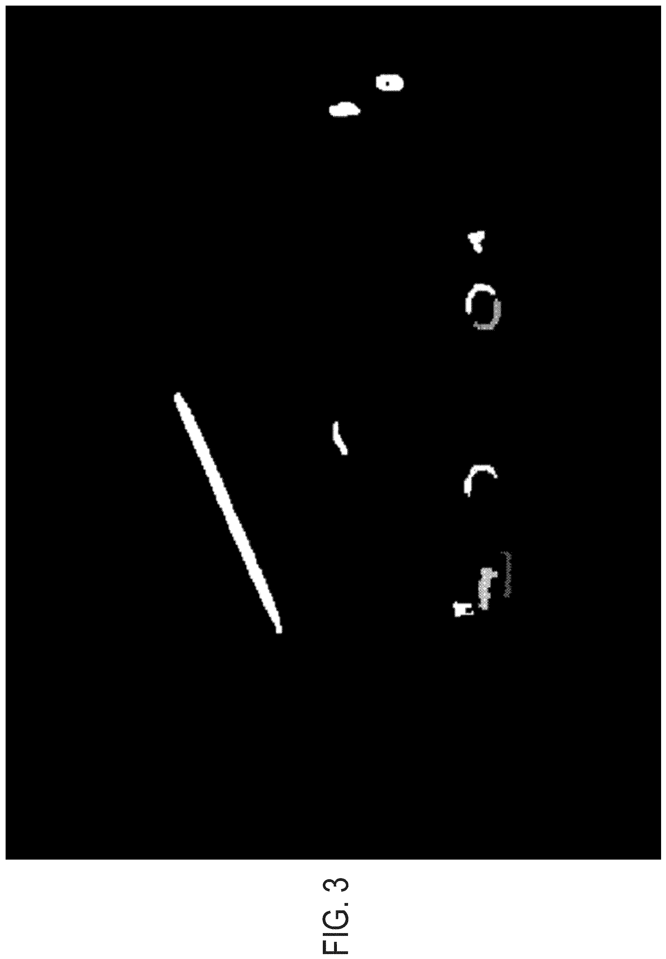

In the first embodiment of the present invention, an item suspected to house a flaky prohibited article, is a luggage box. With referring to figure 1, if it is intended to make inspection and recognition of the luggage box so as to determine whether it contains the flaky prohibited articles, then the recognizing steps thereof are exemplified as follows:
1) tomogram data of the objects to be inspected for one tomogram are read in;
2) The tomogram data is pre-processed. The pre-processing method in particular comprises: threshold limit, smoothing and quantifying of the tomogram data. As shown in figure 2, after quantifying process, the recognized image shows out a long strip-shaped region at a left corner of a rectangular profile, and two rings at the bottom thereof. It can be apparent that the rectangular profile is a sectional profile of the luggage box, and the two rings are sectional profiles of two pulling bars of the luggage box. The long strip-shaped area is suspected to be one flaky prohibited article, which will be further recognized and determined in the subsequent steps.
3) The pre-processed tomogram data are split into a plurality of regions having similar physical properties (for example, density). As shown in figure 3, in the image of tomogram data after splitting process, several regions are highlighted from the black background. It is extremely clear for the long strip-shaped region as shown in figure 2.
4) Analyzing whether each of the split regions is a flaky region, is performed by principal rules as follows:
   Firstly, a length of the split region cannot be less than a predetermined first threshold. Specifically, the length of the present embodiment is approximately a half of a number of profile pixels of the split region. Taking as one example, the first threshold is set to be 80 pixels. A certain split region has a number of profile pixels being 178, and then the length thereof is calculated as 89 pixels.

Secondly, a thickness of the split region cannot be larger than a predetermined second threshold. To be specific, the thickness is obtained by a pixel number in an area of the split region divided by the length thereof. For example, the second threshold is set to be 9 pixels. One certain split region has a pixel number in an area thereof to be 632, and the length is of 89 pixels, then the thickness thereof is calculated as 7.1 pixels.

Thirdly, uniformity of the thickness of the split region cannot be larger than a predetermined third threshold. Specifically, the uniformity of the thickness is measured by "standard deviation of the thickness of the split region divided by average of thickness thereof". For example, the third threshold is set to be 0.5. One split strip-shaped region has a standard deviation of the thickness to be 2.4, and the average of thickness is of 7.1 pixels.

When the above three conditions are satisfied at the same time, the split region is recognized as the sheet-shaped region.

It should be noted that the skilled person in the art can determine values of the first, second, and third thresholds as required, rather than limited to the above exemplified values. Of course, the skilled person in the art can use other known technical means in the art to determine whether the split region is a flaky region. Thus, it is apparent that such technical means should be interpreted to fall within the scope of the present invention.

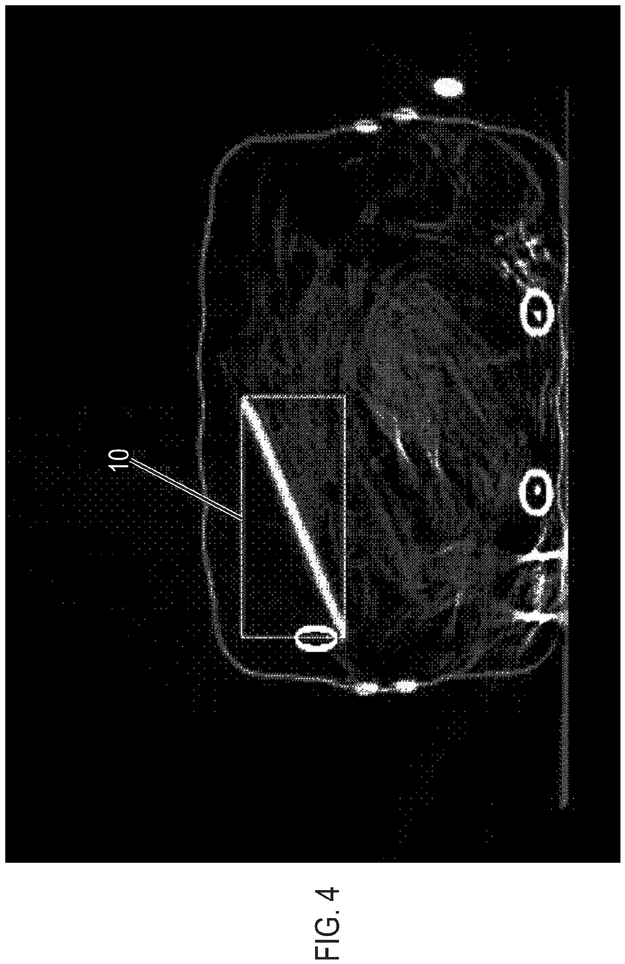

5) The flaky regions detected out in the current tomogram is post-processed, so as to merge short and split flaky regions as a long flaky region (i.e., merging process). Such merging step is performed based on positional proximity and similarity of physical properties(for example, density and atomic number). It can be seen from figure 4 that the recognized region is donated by a reference number 10. It can be known from the above description that the step 5) is optional. The step 5) can be neglected when only one flaky region is present in the tomogram or it is thought that the merging process is not necessary.

6) It is performed to determine whether the flaky region recognized in the current tomogram can be merged with the flaky region detected from the previous tomogram, so as to form a flaky target. It should be noted that if the current tomogram is a first tomogram of the object to be inspected, then it is not necessary for such merging step, and the flaky region is directly considered as a flaky target. After the first tomogram of the object to be inspected is processed, it should be determined whether the flaky regions inspected in the current tomogram can be merged with the previous flaky target (i.e., the flaky target analyzed out in the latest tomogram before the current tomogram, for example, the flaky target recognized out in the first tomogram). This can be determined on basis of the positional proximity, similarity of the physical property (for example, density and atomic number). If not, then a new flaky target is established.

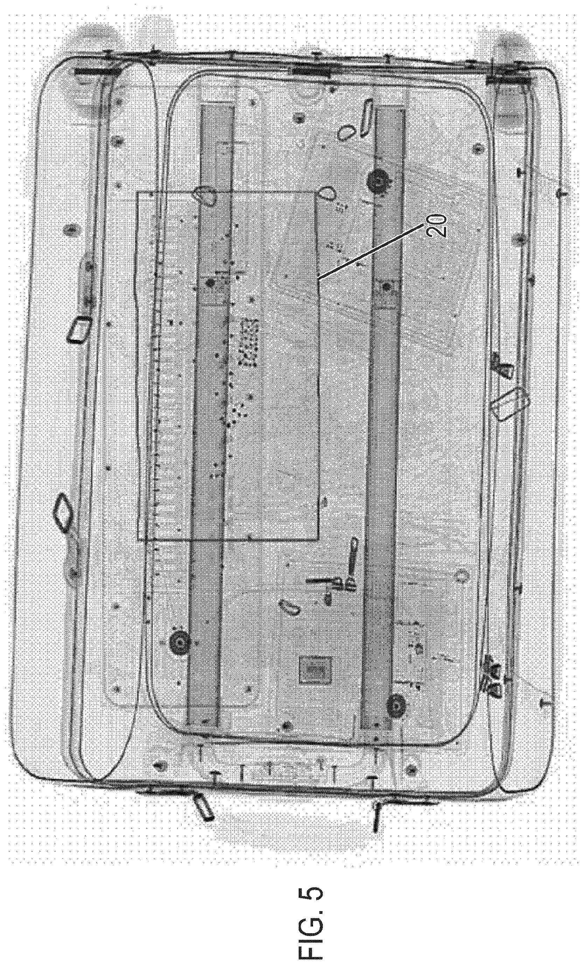

7) The step of determining whether each detected flaky target is complete or finished, is performed. If the detected flaky target is finished, then the flaky target having a mass within a predetermined or reasonable range (i.e., a mass range of a prohibited article) is outputted. As shown in figure 5, the outputted flaky target is donated by a reference number 20.

8) The steps (1)-(7) are repeated and each tomogram data are processed layer by layer, until all of the tomogram data have been processed.

Here, it can be seen that the flaky target 20 can be recognized out by the recognizing method in accordance with the first embodiment of the present invention.

It should be understood that the recognizing method of the present embodiment can apply to recognize the cutting tools, because they have the features of flaky shapes. When the thickness of the cutting tool conforms to the feature of the flaky shape in the above method, and the physical property (in the present embodiment for example, the values of the density and atomic numbers, or the like) of the image in this method is set to be characteristics of raw material (for example, materials such as iron, copper and so on) of the cutting tool, such method can be used to automatically recognize and inspect the cutting tools.

Of course, the above recognizing method of the flaky prohibited articles can be applied to flaky explosives or drugs. If required, appropriate adjustments of parameters and/or technical means can be performed based on the inspected targets (for example, prohibited articles, explosives, or drugs).

### Second Embodiment

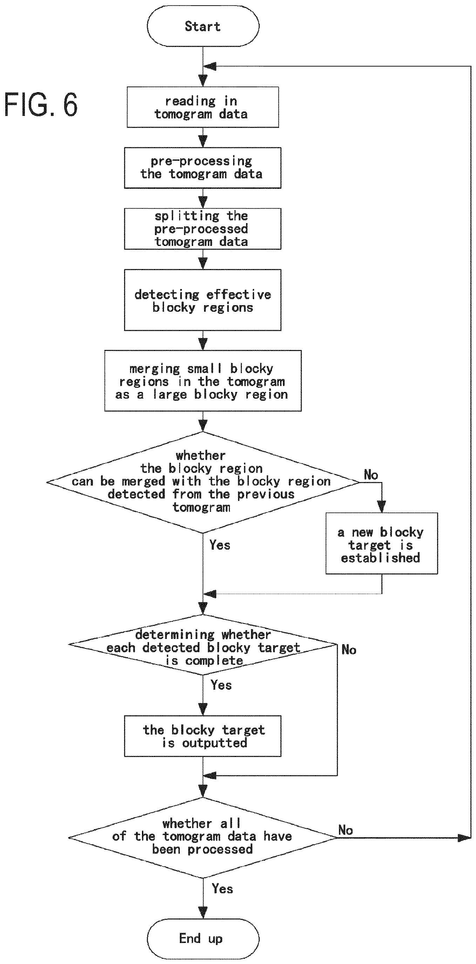

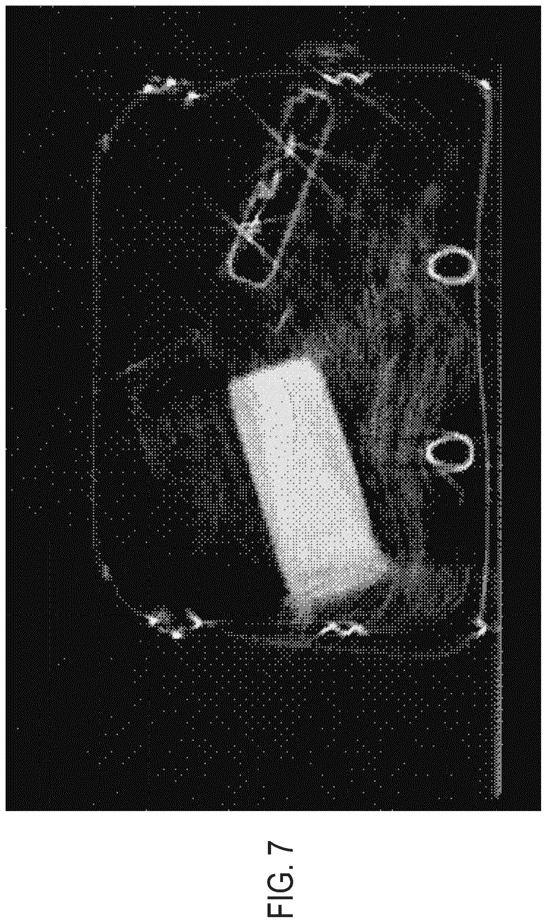

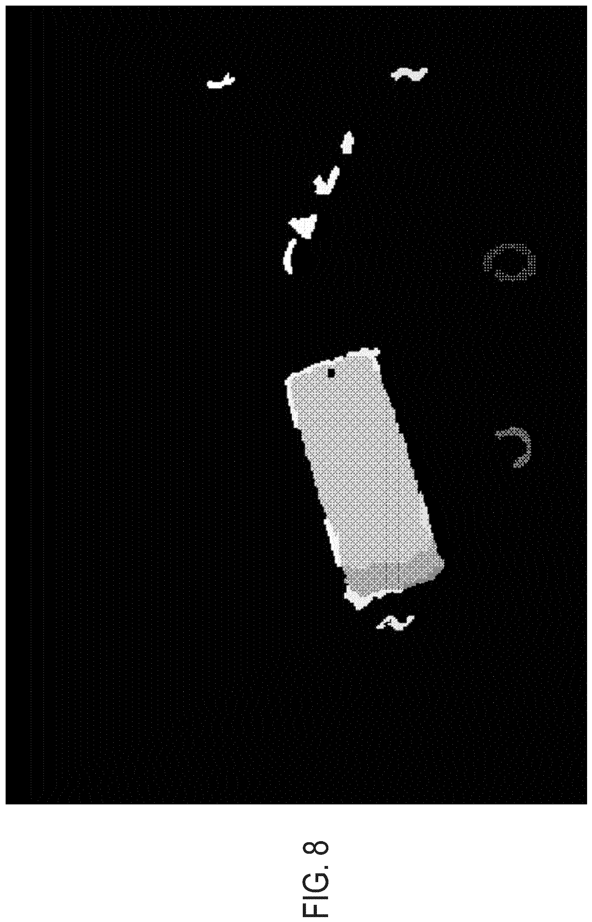

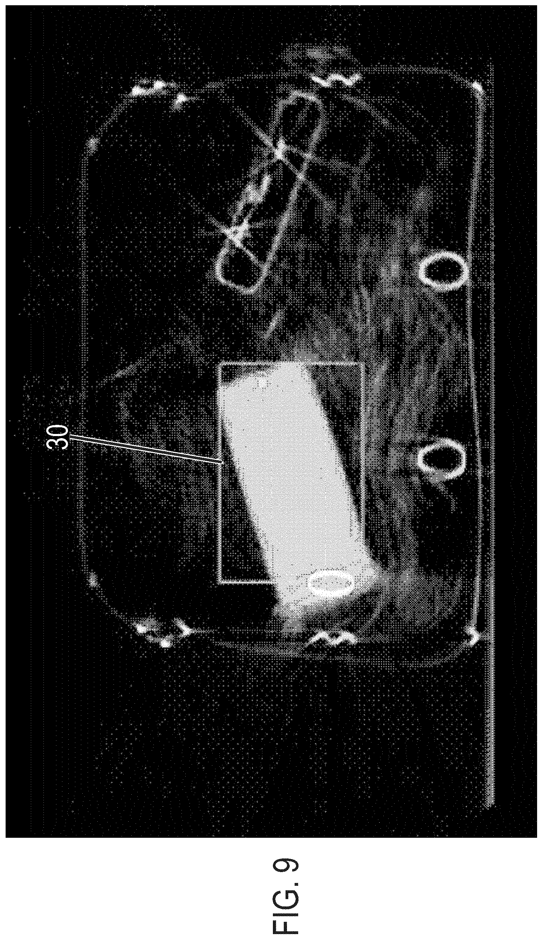

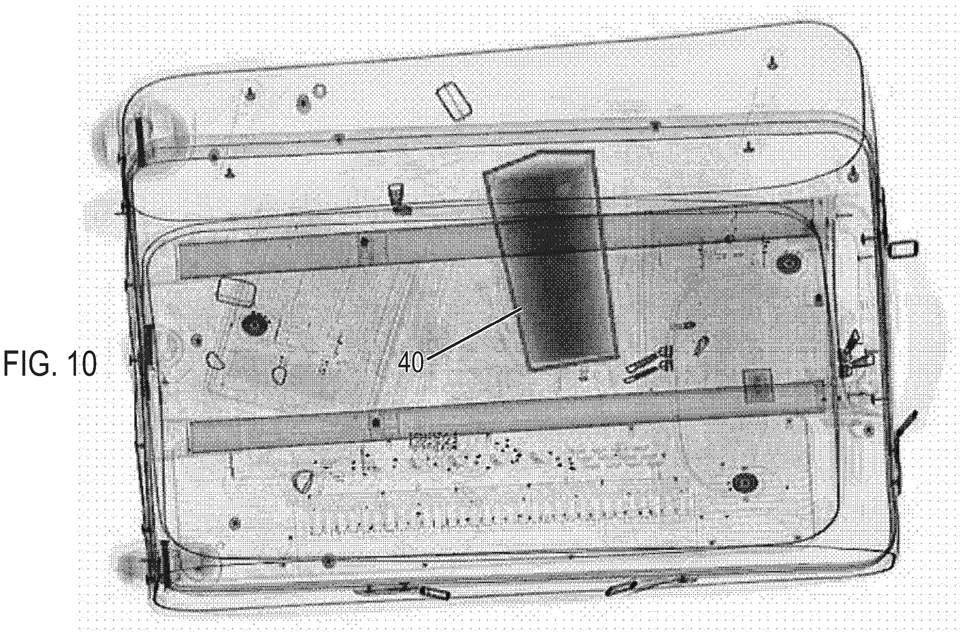

In the second embodiment of the present invention, an item suspected to house a blocky prohibited article, is a luggage box. With referring to figure 6, if it is intended to make inspection and recognition of the luggage box so as to determine whether it contains the blocky prohibited articles, then the recognizing steps thereof are exampled as follows:
1) tomogram data of the objects to be inspected (for example, the luggage box) for one tomogram are read in;
2) Current tomogram data are pre-processed. The pre-processing method comprises: threshold limit, smoothing and quantifying of the tomogram data, or the like. As shown in figure 7, after quantifying process, the recognized image shows out a rectangular blocky region (which is gray white) at the left side of a rectangular profile, and two rings at the bottom thereof. It can be apparent that the rectangular profile is of a sectional profile of the luggage box, and the two rings are of sectional profiles of two pulling bars of the luggage box. The gray-white and rectangular blocky area is suspected to be one blocky prohibited article, which will be further recognized and determined in the subsequent steps.
3) The pre-processed tomogram data are split into a plurality of regions having similar physical properties (for example, density). As shown in figure 8, in the image of tomogram data after splitting process, several regions are highlighted from the black background. It is extremely clear for the grey-white and rectangular blocky region as shown in figure 7.
4) As for each split region, physical property (for example, an average of density and/or atomic number) thereof is searched within a database of prohibited articles, wherein if the physical property searched is prohibitive, then it is deemed that the split region is recognized as an effective blocky region. The expression "the physical property searched being prohibitive" is meant that the physical property of the split region matches to data within the database of the prohibited articles (for example, explosives, or drugs).
5) The blocky regions detected out in the current tomogram are post-processed, so as to merge small and split blocky regions into a large blocky region (i.e., merging process). Such merging step is performed based on positional proximity and similarity of physical properties (for example, density and atomic number). It can be seen from figure 9 that the recognized region is donated by a reference number 30. It can be known from the above description that the step 5) is optional. The step 5) can be neglected when only one blocky region is present in the tomogram or it is thought that the merging process is not necessary.
6) A step of determining whether the blocky region recognized in the current tomogram can be merged with the blocky region detected from the previous tomogram, is performed so as to form a blocky target. It should be noted that if the current tomogram is a first tomogram of the object to be inspected, then it is not necessary for such merging step, and the blocky region is directly considered as a blocky target. After the first tomogram of the object to be inspected is processed, it should be determined whether the blocky regions inspected in the current tomogram can be merged with the previous blocky target (i.e., the blocky target analyzed out in the latest tomogram before the current tomogram, for example, the blocky target recognized out in the first tomogram). This can be determined on basis of the positional proximity, similarity of the physical property (for example, density and atomic number). If not, then a new blocky target is established.
7) A step of determining whether each detected blocky target is complete or finished, is performed. If the detected blocky target is finished, then the blocky target having a mass within a predetermined or reasonable range (i.e., a mass range of a prohibited article) is outputted. As shown in figure 10, the outputted blocky target is donated by a reference number 40.
8) Steps (1)-(7) are repeated and each tomogram data are processed layer by layer, until all of the tomogram data have been processed.

Here, it can be seen that the blocky target 40 can be recognized out by the recognizing method in accordance with the second embodiment of the present invention.

It should be understood that the present recognizing method of the present embodiment is not only applicable to the prohibited articles, but also to the materials such as explosives or drugs, as long as they have the flaky or blocky shape characteristics. In this case, it should be noted that the database of the prohibited articles should be replaced by the database of explosives or drugs, in this way, the above described method will become a recognizing method for explosives or drugs.

The present method is described by taking a CT system for item machine as one example. In practice, this method is applicable to various systems generating three-dimensional data, especially, a system generating tomogram data, including CT systems and nuclear magnetic resonance systems. Other systems generating three-dimensional data can also perform recognition and inspection of the flaky and blocky articles, as long as they can process the data one layer by one layer (tomogram by tomogram) in accordance with the present recognizing method.

Although some embodiments of the general inventive concept are illustrated and explained, it would be appreciated by those skilled in the art that modifications and variations may be made in these embodiments without departing from the principles of the general inventive concept of the disclosure, the scope of which is defined in the appended claims.

## Claims

1. A method for recognizing flaky prohibited articles, explosives or drugs, the method comprising steps of:
(1) reading in tomogram data of an object to be inspected for one tomogram;
(2) pre-processing the tomogram data;
(3) splitting the pre-processed tomogram data into a plurality of regions that have similar physical properties;
(4) analyzing whether each of the split regions is a flaky region based on the following regulations:
a length of the split region cannot be less than a predetermined first threshold;
a thickness of the split region cannot be larger than a predetermined second threshold;
uniformity of the thickness of the split region cannot be larger than a predetermined third threshold;
when the above three conditions are satisfied at the same time, the split region is recognized as the flaky region;
(5) determining whether the flaky region recognized in the current tomogram can be merged with the flaky region detected from the previous tomogram, so as to form a flaky target;
(6) determining whether each detected flaky target is complete or finished;
(7) repeating steps (1)-(6) to process the tomogram data layer by layer, until all of the tomogram data have been processed.

2. The method of claim 1, **characterized in that**,
after the step (4), the method further comprises post-processing the flaky regions detected out in the current tomogram, so as to merge short and split flaky regions into a long flaky region.

3. The method of claim 2, **characterized in that**,
the merging step in the step (5) and the process to merge the short flaky regions are performed based on positional proximity and similarity of physical properties, wherein the physical properties comprise density or atomic numbers.

4. The method of claim 1, **characterized in that**,
the length is a half of a number of profile pixels of the split region; the thickness is an area of the split region divided by the length; the uniformity of the thickness is measured by standard deviation of the thickness of the split region divided by an average of thickness thereof.

5. The method of any preceding claim, **characterized in that**,
in the step (5), if it is determined that the flaky regions detected in the current tomogram can be merged with the previous flaky targets, then the step (6) is performed; otherwise, a new flaky target is established.

6. The method of any preceding claim, **characterized in that**,
during the step (6), if it is determined that each detected flaky target is finished or complete, then the flaky target with a mass within a predetermined range is outputted.

7. The method of any preceding claim, **characterized in that**,
the pre-processing step comprises: threshold limit, smoothing and quantifying of the tomogram data, and/or this method is applicable to a CT system or a nuclear magnetic resonance system.

8. A method for recognizing blocky prohibited articles, explosives or drugs, the method comprising the steps of:
(1) reading in tomogram data for one tomogram of an object to be inspected;
(2) pre-processing the current tomogram data;
(3) splitting the pre-processed tomogram data into a plurality of regions that have similar physical properties;
(4) as for each split region, physical property thereof is searched in a database of prohibited articles, explosives or drugs, wherein if the physical property searched is prohibitive, then the split region is recognized as an effective blocky region;
(5) determining whether the blocky region recognized in the current tomogram can be merged with the blocky region detected from the previous tomogram, so as to form a blocky target;
(6) determining whether each detected blocky target is finished or complete;
(7) repeating steps (1)-(6) to process the tomogram data layer by layer, until all of the tomogram data have been processed.

9. The method of claim 8, **characterized in that**,
after the step (4), the method further comprises post-processing the blocky regions detected out in the current tomogram, so as to merge small and split blocky regions into a large blocky region.

10. The method of claim 9, **characterized in that**,
the merging step in the step (5) and the process to merge the small blocky regions are performed based on positional proximity and similarity of physical properties, wherein the physical properties comprise density or atomic numbers.

11. The method of any one of claims 8 to 10, **characterized in that**,
the physical property of the split region is compared to data within a database of the prohibited articles, explosives or drugs.

12. The method of any one of claims 8 to 11, **characterized in that**,
in the step (5), if it is determined that the blocky regions detected in the current tomogram can be merged with the previous blocky targets, then the step (6) is performed; otherwise, a new blocky target is established.

13. The method of any one of claims 8 to 12, **characterized in that**,
during the step (6), if it is determined that the detection to each detected blocky target is finished or complete, then the blocky target with a mass within a predetermined ranged is outputted.

14. The method of any one of claims 8 to 13, **characterized in that**,
the pre-processing step comprises: threshold limit, smoothing and quantifying of the tomogram data, and/or this method is applicable to a CT system or a nuclear magnetic resonance system.

## Patentansprüche

1. Verfahren zur Erkennung von flockigen verbotenen Artikeln, Sprengstoffen oder Drogen, wobei das Verfahren die Schritte umfasst:
(1) Lesen in Tomogrammdaten eines zu untersuchenden Objekts für ein Tomogramm;
(2) Vorverarbeiten der Tomogrammdaten;
(3) Aufteilen der vorverarbeiteten Tomogrammdaten in eine Vielzahl von Regionen, die ähnliche physikalische Eigenschaften haben;
(4) Analysieren, ob jede der Aufteilungsregionen eine flockige Region ist, basierend auf den folgenden Regeln:
eine Länge der Aufteilungsregion darf nicht kleiner als ein vordefinierter erster Schwellenwert sein;
eine Dicke der Aufteilungsregion darf nicht größer als ein vordefinierter zweiter Schwellenwert sein;
die Gleichförmigkeit der Dicke der Aufteilungsregion darf nicht größer als ein vordefinierter dritter Schwellenwert sein;
die Aufteilungsregion wird als die flockige Region erkannt, wenn die obigen drei Bedingungen gleichzeitig erfüllt sind;
(5) Ermitteln, ob die in dem aktuellen Tomogramm erkannte flockige Region mit der aus dem vorhergehenden Tomogramm detektierten flockigen Region zusammengeführt werden kann, um so ein flockiges Ziel zu bilden;
(6) Ermitteln, ob jedes detektierte flockige Ziel komplett oder fertiggestellt ist;
(7) Wiederholen der Schritte (1) bis (6), um die Tomogrammdaten Schicht für Schicht zu verarbeiten, bis alle der Tomogrammdaten verarbeitet worden sind.

2. Verfahren nach Anspruch 1, **dadurch gekennzeichnet, dass**
das Verfahren nach dem Schritt (4) des Weiteren Nachverarbeiten der flockigen Regionen umfasst, die in dem aktuellen Tomogramm detektiert worden sind, um so kurze und aufgeteilte flockige Regionen zu einer langen flockigen Region zusammenzuführen.

3. Verfahren nach Anspruch 2, **dadurch gekennzeichnet, dass**
der Zusammenführungsschritt in dem Schritt (5) und der Prozess des Zusammenführens der kurzen flockigen Regionen basierend auf Positionsnähe und Ähnlichkeit der physikalischen Eigenschaften durchgeführt wird, wobei die physikalischen Eigenschaften Dichte oder Ordnungszahlen umfassen.

4. Verfahren nach Anspruch 1, **dadurch gekennzeichnet, dass**
die Länge die Hälfte einer Anzahl von Profilpixeln der Aufteilungsregion ist; die Dicke eine Fläche der Aufteilungsregion, geteilt durch die Länge ist; die Gleichförmigkeit der Dicke durch Standardabweichung der Dicke der Aufteilungsregion, geteilt durch einen Durchschnittswert von deren Dicke, gemessen wird.

5. Verfahren nach einem der vorhergehenden Ansprüche, **dadurch gekennzeichnet, dass**
in dem Schritt (5), falls ermittelt wird, dass die in dem aktuellen Tomogramm detektierten flockigen Regionen mit den vorhergehenden flockigen Zielen zusammengeführt werden können, dann der Schritt (6) durchgeführt wird; ansonsten ein neues flockiges Ziel festgelegt wird.

6. Verfahren nach einem der vorhergehenden Ansprüche, **dadurch gekennzeichnet, dass**
während des Schrittes (6), falls ermittelt wird, dass jedes flockige Ziel fertiggestellt oder komplett ist, dann das flockige Ziel mit einer Masse innerhalb eines vorbestimmten Bereichs ausgegeben wird.

7. Verfahren nach einem der vorhergehenden Ansprüche, **dadurch gekennzeichnet, dass**
der Vorverarbeitungsschritt umfasst: Schwellenwertgrenze, Glätten und Quantifizieren der Tomogrammdaten, und/oder dass dieses Verfahren auf ein CT-System oder Kernspintomographiesystem anwendbar ist.

8. Verfahren zur Erkennung von blockförmigen verbotenen Artikeln, Sprengstoffen oder Drogen, wobei das Verfahren die Schritte umfasst:
(1) Lesen in Tomogrammdaten für ein Tomogramm eines zu untersuchenden Objekts;
(2) Vorverarbeiten der aktuellen Tomogrammdaten;
(3) Aufteilen der vorverarbeiteten Tomogrammdaten in eine Vielzahl von Regionen, die ähnliche physikalische Eigenschaften haben;
(4) wobei für jede Aufteilungsregion deren physikalische Eigenschaft in einer Datenbank von verbotenen Artikeln, Sprengstoffen oder Drogen gesucht wird, wobei, falls die gesuchte physikalische Eigenschaft verbietend ist, dann die Aufteilungsregion als eine effektive blockförmige Region erkannt wird;
(5) Ermitteln, ob die in dem aktuellen Tomogramm erkannte blockförmige Region mit der aus dem vorhergehenden Tomogramm detektierten blockförmigen Region zusammengeführt werden kann, um so ein blockförmiges Ziel zu bilden;
(6) Ermitteln, ob jedes detektierte blockförmige Ziel fertiggestellt oder komplett ist;
(7) Wiederholen der Schritte (1) bis (6), um die Tomogrammdaten Schicht für Schicht zu verarbeiten, bis alle der Tomogrammdaten verarbeitet worden sind.

9. Verfahren nach Anspruch 8, **dadurch gekennzeichnet, dass**
das Verfahren nach dem Schritt (4) des Weiteren Nachverarbeiten der blockförmigen Regionen umfasst, die in dem aktuellen Tomogramm detektiert worden sind, um so kleine und aufgeteilte blockförmige Regionen zu einer großen blockförmigen Region zusammenzuführen.

10. Verfahren nach Anspruch 9, **dadurch gekennzeichnet, dass**
der Zusammenführungsschritt in dem Schritt (5) und der Prozess des Zusammenführens der kleinen blockförmigen Regionen basierend auf Positionsnähe und
Ähnlichkeit der physikalischen Eigenschaften durchgeführt wird, wobei die physikalischen Eigenschaften Dichte oder Ordnungszahlen umfassen.

11. Verfahren nach einem der Ansprüche 8 bis 10, **dadurch gekennzeichnet, dass**
die physikalische Eigenschaft der Aufteilungsregion mit Daten innerhalb einer Datenbank der verbotenen Artikel, Sprengstoffe oder Drogen verglichen wird.

12. Verfahren nach einem der Ansprüche 8 bis 11, **dadurch gekennzeichnet, dass**
in dem Schritt (5), falls ermittelt wird, dass die in dem aktuellen Tomogramm detektierten blockförmigen Regionen mit den vorhergehenden blockförmigen Zielen zusammengeführt werden können, dann der Schritt (6) durchgeführt wird; ansonsten ein neues blockförmiges Ziel festgelegt wird.

13. Verfahren nach einem der Ansprüche 8 bis 12, **dadurch gekennzeichnet, dass**
während des Schrittes (6), falls ermittelt wird, dass die Detektierung für jedes detektierte blockförmige Ziel fertiggestellt oder komplett ist, dann das blockförmige Ziel mit einer Masse innerhalb eines vorbestimmten Bereichs ausgegeben wird.

14. Verfahren nach einem der Ansprüche 8 bis 13, **dadurch gekennzeichnet, dass**
der Vorverarbeitungsschritt umfasst: Schwellenwertgrenze, Glätten und Quantifizieren der Tomogrammdaten, und/oder dass dieses Verfahren auf ein CT-System oder Kernspintomographiesystem anwendbar ist.

## Revendications

1. Procédé de reconnaissance d'articles interdits, explosifs ou médicaments lamelliformes, le procédé comprenant les étapes de :
(1) lecture de données de tomogramme d'un objet devant être inspecté pour un tomogramme ;
(2) prétraitement des données de tomogramme ;
(3) séparation des données de tomogramme prétraitées en une pluralité de régions qui ont des propriétés physiques similaires ;
(4) analyse pour savoir si chacune des régions séparées est une région lamelliforme sur la base des règles suivantes :
une longueur de la région séparée ne peut pas être plus petite qu'un premier seuil prédéterminé ;
une épaisseur de la région séparée ne peut pas être plus grande qu'un deuxième seuil prédéterminé ;
l'uniformité de l'épaisseur de la région séparée ne peut pas être plus grande qu'un troisième seuil prédéterminé ;
quand les trois conditions précitées sont satisfaites en même temps, la région séparée est reconnue comme la région lamelliforme ;
(5) détermination que la région lamelliforme reconnue dans le tomogramme en cours peut être fusionnée ou non avec la région lamelliforme détectée à partir du tomogramme précédent, de manière à former une cible lamelliforme ;
(6) détermination que chaque cible lamelliforme détectée est complète ou finie ou non ;
(7) répétition des étapes (1)-(6) pour traiter les données de tomogramme couche par couche, jusqu'à ce que toutes les données de tomogramme aient été traitées.

2. Procédé de la revendication 1, **caractérisé en ce que**,
après l'étape (4), le procédé comprend en outre le post-traitement des régions lamelliformes détectées dans le tomogramme en cours, de manière à fusionner des régions lamelliformes courtes et séparées en une longue région lamelliforme.

3. Procédé de la revendication 2, **caractérisé en ce que**
l'étape de fusionnement à l'étape (5) et le traitement pour fusionner les courtes régions lamelliformes sont effectués sur la base d'une proximité de positions et d'une similitude de propriétés physiques, les propriétés physiques comprenant une masse volumique ou des numéros atomiques.

4. Procédé de la revendication 1, **caractérisé en ce que**
la longueur est une moitié d'un nombre de pixels de profil de la région séparée ; l'épaisseur est une superficie de la région séparée divisée par la longueur ; l'uniformité de l'épaisseur est mesurée par l'écart type de l'épaisseur de la région séparée divisé par une moyenne de l'épaisseur de celle-ci.

5. Procédé d'une quelconque revendication précédente, **caractérisé en ce que**,
à l'étape (5), s'il est déterminé que les régions lamelliformes détectées dans le tomogramme en cours peuvent être fusionnées avec les cibles lamelliformes précédentes, alors l'étape (6) est effectuée ; sinon, une nouvelle cible lamelliforme est établie.

6. Procédé d'une quelconque revendication précédente, **caractérisé en ce que**,
pendant l'étape (6), s'il est déterminé que chaque cible lamelliforme détectée est finie ou complète, alors la cible lamelliforme avec une masse à l'intérieur d'une gamme prédéterminée est affichée.

7. Procédé d'une quelconque revendication précédente, **caractérisé en ce que**
l'étape de prétraitement comprend : seuil limite, le lissage et la quantification des données de tomogramme, et/ou ce procédé est applicable à un système de tomodensitométrie ou un système de résonance magnétique nucléaire.

8. Procédé de reconnaissance d'articles interdits, explosifs ou médicaments massifs, le procédé comprenant les étapes de :
(1) lecture de données de tomogramme pour un tomogramme d'un objet devant être inspecté ;
(2) prétraitement des données de tomogramme en cours ;
(3) séparation des données de tomogramme prétraitées en une pluralité de régions qui ont des propriétés physiques similaires ;
(4) pour chaque région séparée, une propriété physique de celle-ci est recherchée dans une base de données d'articles interdits, d'explosifs ou de médicaments, la région séparée, si la propriété physique recherchée est interdite, étant alors reconnue comme une région massive effective ;
(5) détermination que la région massive reconnue dans le tomogramme en cours peut être fusionnée ou non avec la région massive détectée à partir du tomogramme précédent, de manière à former une cible massive ;
(6) détermination que chaque cible massive détectée est finie ou complète ou non ;
(7) répétition des étapes (1)-(6) pour traiter les données de tomogramme couche par couche, jusqu'à ce que toutes les données de tomogramme aient été traitées.

9. Procédé de la revendication 8, **caractérisé en ce que**,
après l'étape (4), le procédé comprend en outre le post-traitement des régions massives détectées dans le tomogramme en cours, de manière à fusionner des régions massives petites et séparées en une grosse région massive.

10. Procédé de la revendication 9, **caractérisé en ce que**
l'étape de fusionnement à l'étape (5) et le traitement pour fusionner les petites régions massives sont effectués sur la base d'une proximité de positions et d'une similitude de propriétés physiques, les propriétés physiques comprenant une masse volumique ou des numéros atomiques.

11. Procédé de l'une quelconque des revendications 8 à 10, **caractérisé en ce que**
la propriété physique de la région séparée est comparée à des données à l'intérieur d'une base de données des articles interdits, explosifs ou médicaments.

12. Procédé de l'une quelconque des revendications 8 à 11, **caractérisé en ce que**,
à l'étape (5), s'il est déterminé que les régions massives détectées dans le tomogramme en cours peuvent être fusionnées avec les cibles massives précédentes, alors l'étape (6) est effectuée ; sinon, une nouvelle cible massive est établie.

13. Procédé de l'une quelconque des revendications 8 à 12, **caractérisé en ce que**,
pendant l'étape (6), s'il est déterminé que la détection de chaque cible massive détectée est finie ou complète, alors la cible massive avec une masse à l'intérieur d'une gamme prédéterminée est affichée.

14. Procédé de l'une quelconque des revendications 8 à 13, **caractérisé en ce que**
l'étape de prétraitement comprend : seuil limite, le lissage et la quantification des données de tomogramme, et/ou ce procédé est applicable à un système de tomodensitométrie ou un système de résonance magnétique nucléaire.
